**Europäisches Patentamt**

**European Patent Office**

**Office européen des brevets**

(11) Veröffentlichungsnummer: **0 250 711 B1**

# EUROPÄISCHE PATENTSCHRIFT

(45) Veröffentlichungstag der Patentschrift: **29.01.92**

(51) Int. Cl.5: **G01B 21/00**, G01D 5/36

(21) Anmeldenummer: **87102858.5**

(22) Anmeldetag: **27.02.87**

(54) **Fotoelektrische Messeinrichtung.**

(30) Priorität: **14.05.86 DE 3616144**

(43) Veröffentlichungstag der Anmeldung:
**07.01.88 Patentblatt 88/01**

(45) Bekanntmachung des Hinweises auf die
Patenterteilung:
**29.01.92 Patentblatt 92/05**

(84) Benannte Vertragsstaaten:
**AT CH DE ES FR GB IT LI NL SE**

(56) Entgegenhaltungen:
EP-A- 0 143 525
EP-A- 0 157 034
DE-A- 2 500 798

WERKSTATT & BETRIEB Band 112, Nr 11,
November 1979, Seiten 782-786, München, D;
AT Shepherd et al: "Moiré-Streifen in der
Messtechnik"

WERKSTATT & BETRIEB Band 112, Nr 11,
November 1979, Seiten 787-792, München, D;
R Schneider: "Inkrementales Auflichtlaengenmesssystem"

(73) Patentinhaber: **Dr. Johannes Heidenhain GmbH**
**Dr.-Johannes-Heidenhain-Strasse 5 Postfach
1260**
**W-8225 Traunreut(DE)**

(72) Erfinder: **Ernst, Alfons, Dipl.-Ing.**
**Traunring 62**
**W-8225 Traunreut(DE)**

## Beschreibung

Die Erfindung betrifft eine fotoelektrische Meßeinrichtung gemäß dem Oberbegriff des Anspruches 1.

Bei der Relativverschiebung zweier optischer Gitter kann in bekannter Weise ein elektrisches Ausgangssignal erzeugt werden, das mehr oder weniger oberwellenbehaftet ist. Aus den zahlreichen Druckschriften, die sich mit diesem Meßprinzip befassen, sei die DE-OS 25 00 798 genannt, aus der es bekannt ist, den Detektor für die Moiré-Streifen aus vier Teilfeldern aufzubauen. Die Anordnung der Teilfelder ist dabei so gewählt, daß Geraden, die durch die Flächenschwerpunkte dieser Teilfelder gehen, sowohl zu den Moiré-Streifen als auch zueinander parallel verlaufen. Nach einem der Ausführungsbeispiele ergibt sich dabei eine bessere Oberwellenfilterung, als bei den anderen Ausführungsbeispielen.

Aufgabe der vorliegenden Erfindung ist es, bei einer fotoelektrischen Meßeinrichtung die Oberwellenanteile gezielt aus dem Ausgangssignal zu eliminieren, ohne jedoch einen hohen apparativen Aufwand in Kauf nehmen zu müssen. Zusätzliche Bauelemente wie besonders geformte Blenden sollen vermieden werden (s. DE-PS 16 73 988 und DE-PS 19 41 731). Außerdem soll die Meßeinrichtung unempfindlich gegenüber sprungartigen Teilungsfehlern sein.

Diese Aufgabe wird durch eine fotoelektrische Meßeinrichtung mit den Merkmalen des Anspruchs 1 gelöst.

Die Vorteile der erfindungsgemäßen fotoelektrischen Meßeinrichtung liegen darin, daß durch gezielt ausgewählte Breiten und Formen der Fotoelemente und deren Lagezuordnung zu den Moiré-Streifen beliebige Oberwellen aus dem Ausgangssignal herausgefiltert werden können und daß durch die Mehrfachanordnung von Detektorsystemen Teilungsfehler nurmehr geringfügige Störungen hervorrufen.

Mit Hilfe der Zeichnungen soll die Erfindung anhand von Ausführungsbeispielen noch näher erläutert werden.

Es zeigen

Figur 1      eine Prinzipdarstellung eines Auflicht-Meßgerätes;

Figur 2      ein Detektorsystem;

Figur 3      ein variiertes Detektorsystem mit verschachtelten Fotoelementen;

Figur 4      ein weiteres Detektorsystem;

Figur 5      eine weitere Variante eines Detektorsystems;

Figur 6      ein Detektorsystem mit sinusartigen Fotoelementen;

Figur 7      ein Detektorsystem mit verschachtelten Fotoelementen sinusförmiger Feldkontur und

Figur 8      ein Detektorsystem mit in Reihe geschalteten Fotoelementen.

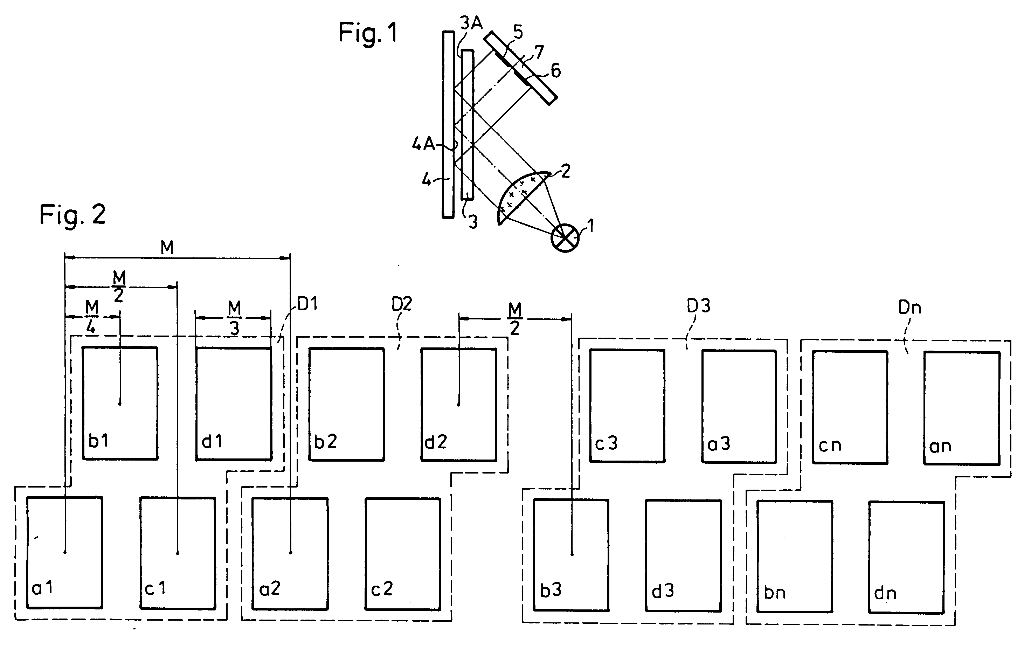

Eine besonders einfache Ausführung einer Meßeinrichtung ist in der Figur 1 dargestellt. Eine Lichtquelle 1 erzeugt in Verbindung mit einem Kondensor 2 paralleles Licht, das durch eine Abtastplatte 3 aus Glas tritt, die auf einer Seite eine Abtastteilung 3A trägt, und fällt auf einen Maßstab 4, der auf der der Abtastteilung 3A zugewandten Seite eine inkrementale Teilung 4A der Teilungsperiode P trägt. Das Licht wird vom Maßstab 4 reflektiert und trifft nach erneutem Durchgang durch die Abtastteilung 3A auf Fotoelemente, die in zwei Reihen 5 und 6 auf einer Trägerplatte 7 angeordnet sind. Die Periode P' der Abtastteilung 3A ist unterschiedlich zur Periode P der Maßstabteilung 4A: $P/P' = 1-k$, wobei $k \ll 1$.

In dem Beispiel sei $k = 0,1$ gewählt. Abtastteilung 3A und Maßstabteilung 4A erzeugen zusammen ein Längs-Moiré-Muster, dessen Periode M das $1/k$ fache der Teilungsperiode P beträgt, also $M = P/k$. Beträgt die Teilungsperiode $P = 0,1$ mm, so ist in dem Beispiel die Moiré-Periode M $0,1/0,1 = 1$ mm. Die Anordnung der Fotoelemente in den Reihen 5 und 6 zeigt Figur 2. Von Mitte Fotoelement zu Mitte Fotoelement beträgt der Abstand M/2, von einem Fotoelement der einen Reihe zu einem Fotoelement der anderen Reihe M/4. Die Fotoelemente a1, b1, c1, d1 sind also zueinander jeweils um $90°$, bezogen auf die Moiré-Periode M, phasenversetzt. Sie erzeugen entsprechend um $90°$ zueinander phasenversetzte Abtastsignale, die in bekannter Weise miteinander verschaltet werden. Aus a1 und c1 entsteht ein Signal S1 und aus b1 und d1 ein Signal S2.

S1 und S2 sind zwei um $90°$ zueinander phasenversetzte, nullsymmetrische Abtastsignale. Die Fotoelemente a1, b1, c1, d1 bilden also bereits eine komplette Abtasteinheit, die im vorgegebenem Rahmen ein oberwellenfreies Ausgangssignal liefert, wenn die Fotoelemente al, b1, c1, d1 so angeordnet und dimensioniert sind, daß das Abtastsignal einer Fourieranalyse unterzogen wird.

Die theoretischen Abhandlungen zur Berechnung der Fourier-Koeffizienten und die technischen Zusammenhänge zwischen dem Abtastsignal und der Eleminierung der Oberwellen sind in der DE-OS 32 39 108 und in der DE-PS 34 12 128 ausführlich erläutert, so daß hier darauf verwiesen werden kann.

S1 enthält also nur die Grundwelle $\sin \vartheta$, während die beiden Oberwellen mit $\sin 2\vartheta$, $\cos 2\vartheta$ und $\sin 3\vartheta$, $\cos 3\vartheta$, also die 2. und 3. Oberwelle bei der beschriebenen Anordnung eliminiert werden. Für das Signal S2 läßt sich der gleiche Beweis führen. Für die einzelnen Teilfelder a1, c1 ... an, cn ist dabei die Bedingung zu erfüllen, daß zur Eliminierung der zweiten Oberwelle der Abstand von Feldmitte zu Feldmitte die Hälfte der Moiré-Periode M beträgt, und daß zur Eliminierung der dritten Oberwelle die Breite eines Teilfeldes a1, c1 ... an, cn ein Drittel der Moiré-Periode M beträgt. Das gleiche gilt für S2 mit den Teilfeldern b1, d1 ... bn, dn.

Werden nun entsprechend Figur 2 mehrere Detektorsysteme D1 ... Dn, bestehend aus je vier Fotoelementen a1, b1, c1, d1; a2, b2, c2, d2 usw. im Abstand M, 2M usw. angeordnet, entstehen weitere Signalpaare, die bei fehlerfreier Teilung 3A, 4A identisch mit S1, S2 sind und zu diesen parallel geschaltet werden können.

Damit sich bei Winkelbewegungen um eine Achse senkrecht zur Teilungsebene der Phasenwinkel zwischen a1, c1, und b1, d1 usw. und damit zwischen S1 und S2 nicht ändert, ist es zweckmäßig, mindestens einmal die Anordnung der Fotoelemente zu tauschen, so daß z. B. a3, c3, in der Reihe mit b1, d1, und b3, d3 in der Reihe mit a1, c1 liegen.

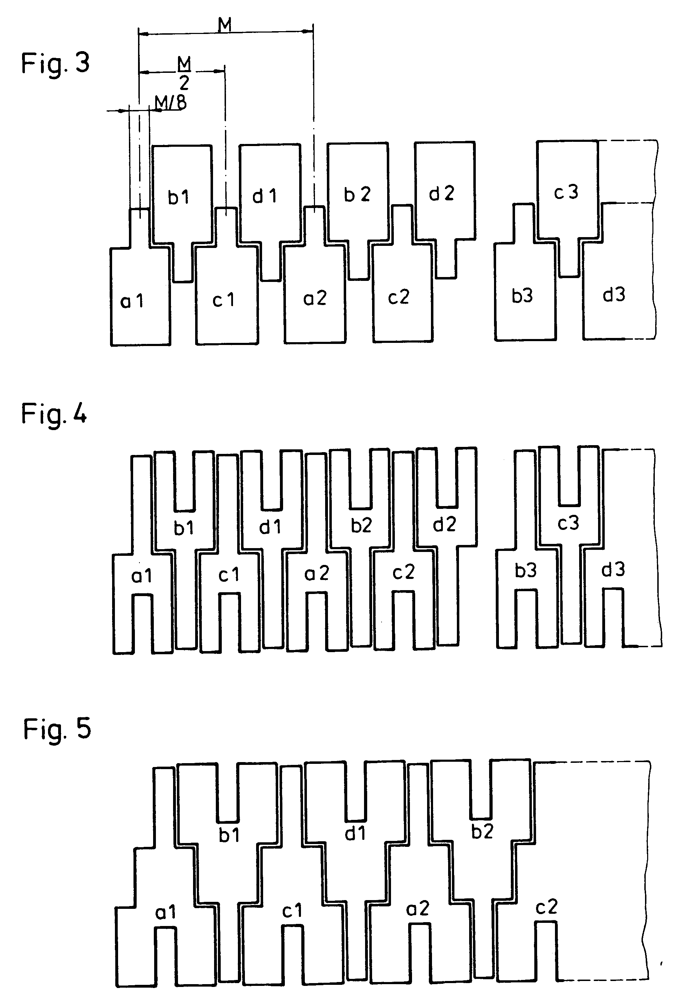

Die Anordnungen der Fotoelemente a1, b1, c1, d1 usw. gemäß der Figuren 3, 4 und 5 zeigen die Variationsmöglichkeiten für die Gestaltung der Detektorsysteme D1 bis Dn, wobei die Längen der Teilbereiche der Fotoelemente entsprechend dem Cosinus des Phasenwinkels variiert sind.

Gemäß Figur 3 lassen sich beispielsweise vier Oberwellen herausfiltern, und in Figur 4 ist eine optimale Verschachtelung der Fotoelemente a1, b1, c1, d1 usw. dargestellt, durch die die Meßeinrichtung unempfindlicher gegen Änderungen des Phasenwinkels zwischen den Ausgangssignalen wird.

In Figur 5 ist eine weitere Variante von verschachtelt angeordneten Fotoelementen a1, b1, c1, d1 usw. dargestellt. Diese Anordnung stellt eine Lösung für sechs Oberwellen dar. Es werden zwölf Teilfelder im Abstand von $360°/12 = 30° = M/12$ vorgesehen.

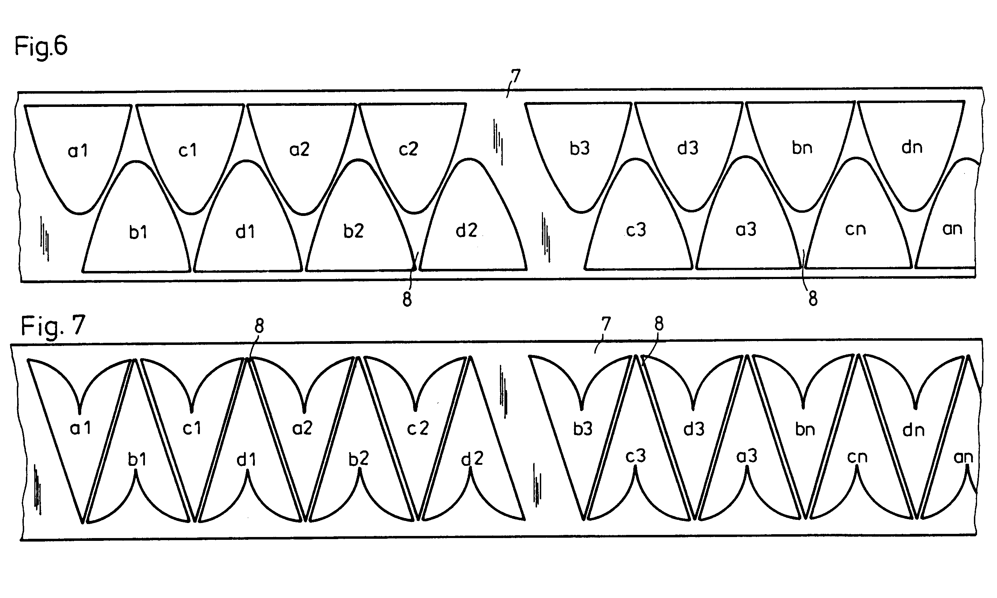

Führt man diesen Lösungsweg über 12, 24 usw. Oberwellen fort, so kommt man in stufenförmiger Annäherung allmählich zu einer sinusförmigen Feldkontur, wie in Figur 6 dargestellt ist. In besonders vorteilhafter Weise sind die Teilfelder a1 ... dn auf einem Siliziumträger 7 integriert. Das gleiche gilt für die Anordnung nach Figur 7, bei der die Teilfelder a1 ... dn bestmöglich ineinander geschachtelt sind. Die Feldbreiten sind in den Fällen der Figuren 6 und 7 die Hälfte der Moiré-Periode M, wobei die Teilfelder also die Fotoelemente - durch schmale, nicht dotierte Zonen 8 gegeneinander isoliert sind.

Es zeigt sich, daß zwischen der Lösung für die zweite und dritte Oberwelle gemäß Figur 2 und den Lösungen für alle Oberwellen gemäß der Figuren 6 und 7 Lösungen für eine beliebige Anzahl von Oberwellen konstruiert werden können (s. Figuren 3 bis 5).

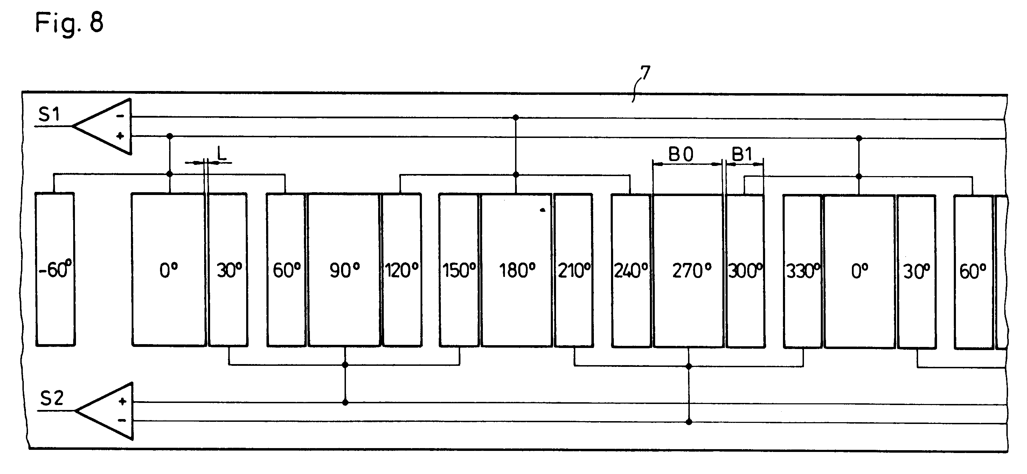

Figur 8 schließlich zeigt eine Einrichtung zur Erzeugung oberwellenfreier Signale, bei der die Fotoelemente in einer Reihe angeordnet sind. Diese Anordnung erlaubt, daß eine nicht dargestellte Zylinderlinse zwischen Abtastplatte 3 und den Fotoelementen angebracht werden kann. Dadurch entsteht der Vorteil, daß eine große Fläche des Maßstabs abgetastet wird, was zur Erhöhung der Genauigkeit beiträgt, wobei trotzdem nur kleinflächige Fotoelemente benötigt werden, was sich günstig im Hinblick hohe Abtastfrequenzen und geringe Kosten auswirkt.

Eine Anordnung von Fotoelementen in einer Reihe, so daß drei, fünf usw. Oberwellen eliminiert werden können, ist in Figur 8 für drei Oberwellen erläutert. Zur Eliminierung von Oberwellen bis zur 3. werden sechs Abtastsignale benötigt, die zueinander jeweils um 60° phasenverschoben sind. Die Amplitude der Abtastsignale wird entsprechend dem Cosinus des Phasenwinkels zur Grundwelle durch entsprechende Dimensionierung der Breite der Fotoelement variiert. Die Breite der Fotoelemente wird außerdem so gewählt, daß die Fotoelemente - die die Abtaststellen zur Erzeugung von S1 und S2 bilden -in einer Reihe hintereinander angeordnet werden können und die Abstände zwischen den einzelnen Fotoelementen minimiert werden.

Im gewählten Beispiel wird das Signal S1 aus zwei Gruppen von Fotoelementen erzeugt, die gegeneinander in Differenz geschaltet sind. Die erste Gruppe besteht aus dem Fotoelement 0° mit der Breite $B0 = 36°$ sowie den beiden Fotoelementen -60° (= 300°) und +60°, mit der Breite B1. Dabei gilt: $sinB0/sinB1 = cos0/cos60° = 1/2$ daraus ergibt sich: $B1 = 17,1°$.

Die zweite Gruppe besteht aus dem Fotoelement 180° mit Breite B0 und den beiden Fotoelementen 120° und 240° mit der Breite B1.

Entsprechend wird das Signal S2 aus den 6 Fotoelementen 30°, 90°, 120°, sowie 210°, 270° und 330° gebildet.

Der Abstand L zwischen den Fotoelementen 0° und 30°, sowie zwischen den Fotoelementen 60° und 90° usw. beträgt in diesem Fall 3,45°.

Die Teilungsperiode auf der Abtastteilung wird im Verhältnis zur Teilungsperiode der Meßteilung so gewählt, daß über das ganze parallel ausgeleuchtete Feld der Abtasteinrichtung mehrere Moiré-Perioden auftreten. Pro Moiré-Periode wird, wie in Figur 8 dargestellt, ein Satz von 2*6 Fotoelementen angeordnet, die zweckmäßig aus einem einzigen Silizium-Plättchen hergestellt werden. Wählt man z. B. vier Moiré-Perioden, so sind insgesamt $2*4 = 48$ Fotoelemente erforderlich. Die elektrische Schaltung der Fotoelemente ist aus Figur 8 ebenfalls ersichtlich. Sie kann auf dem Halbleiter aufgedampft oder außerhalb des Halbleiters auf der Trägerplatte aufgebracht sein.

**Patentansprüche**

1. Fotoelektrische Meßeinrichtung zur Gewinnung von bis zu einer vorgestimmten Bandbreite oberwellenfreien Signalen durch Abtastung einer Meßteilung mit einer Abtastteilung, bei der die Teilungsperioden beider Teilungen gleich oder nur geringfügig unterschiedlich und räumlich so zueinander angeordnet sind, daß bei einer Abtastung eine Moiré-Schwebung entsteht, deren Periodenlänge deutlich größer als die Teilungsperioden der vorgenannten Teilungen ist, mit einem Detektorsystem mit Fotoelementen, die jeweils Licht, das auf ihre Oberfläche trifft in elektrische Abtastsignale umwandeln, wobei die Oberfläche aller Fotoelemente des Detektorsystems in Teilfelder unterteilt ist, die hinsichtlich ihrer Form, Breite und Lage der genannten Moiré-Schwebung derart angepaßt sind, daß bei Verschaltung der Abtastsignale Oberwellen der vorbestimmten Bandbreite aus wenigstens einem periodischen elektrischen Ausgangssignal (S1, S2) eliminiert sind, dadurch gekennzeichnet, daß mehrere Detektorsysteme (D1 ... Dn) mit jeweils mindestens vier Teilfeldern, die jeweils für sich bis zur vorbestimmten Bandbreite oberwellenfreie Signale liefern, in Abständen, die jeweils ein ganzzahliges Vielfaches der Periodenlänge der Moiré-Schwebung sind, in Meßrichtung hintereinander angeordnet sind, wobei die Abtastsignale korrespondierender Fotoelemente jedes Detektorsystems (D1 ... Dn) elektrisch zusammengeschaltet sind.

2. Fotoelektrische Meßeinrichtung nach Anspruch 1, dadurch gekennzeichnet, daß die Fotoelemente (a1 ... dn) der Detektorsysteme (D1 ... Dn) nach Art eines Reißverschlusses flächig ineinander verschachtelt sind.

3. Fotoelektrische Meßeinrichtung nach Anspruch 2, dadurch gekennzeichnet, daß die Fotoelemente (a1 ... dn) Feldbegrenzungen in Form von Sinuskurven aufweisen.

4. Fotoelektrische Meßeinrichtung nach Anspruch 2, dadurch gekennzeichnet, daß die Fotoelemente (a1 ... dn) zungenartige Abschnitte aufweisen, die nach Art eines Reißverschlusses ineinander greifen.

5. Fotoelektrische Meßeinrichtung nach Anspruch 1, dadurch gekennzeichnet, daß die Fotoelemente (a1 ... dn) auf einem Siliziumträger (7) integriert sind.

6. Fotoelektrische Meßeinrichtung nach Anspruch 5, dadurch gekennzeichnet, daß die Fotoelemente (a1 ... dn) durch schmale, nicht dotierte Zonen (8) gegeneinander isoliert sind.

7. Fotoelektrische Meßeinrichtung nach Anspruch 5, dadurch gekennzeichnet, daß auf dem Siliziumträger (7) die elektrische Schaltungsanordnung für die Zusammenschaltung der Fotoelemente (a1 ... dn) integriert ist.

**Claims**

1. Photoelectric measuring device for deriving signals from harmonics up to a given bandwidth by sensing a measuring graduation with a sensing graduation, in which the graduation period of both graduations is the same or only slightly different and are so arranged spatially relative to one another that Moiré fringing results with a period length markedly greater than the graduation period of the aforesaid graduations, with a detector system with photo-elements which each convert light which falls on their surface into electrical sensing signals, wherein the surface of all photo-elements of the detector system is subdivided into partial fields which are so adapted in regard to their form, width and location to the said Moiré fringing that, on combining the sensing signals, harmonics of the given bandwidth are eliminated from at least one periodic electric output signal (S1, S2), characterized in that a plurality of detector systems (D1 ... Dn) are arranged one after the other in the measuring direction, each with at least four partial fields, which each supply their own signals free from harmonics up to the given bandwidth, at spacings which are each a whole multiple of the period length of the Moiré fringing, wherein the sensing signals of corresponding photo-elements of each detector system (D1 ... Dn) are electrically combined.

2. Photoelectric measuring device according to claim 1, characterized in that the photo-elements (a1 ... dn) of the detector systems (D1 ... Dn) are interdigitated flat in the manner of a zip fastener.

3. Photoelectric measuring device according to claim 2, characterized in that the photo-elements (a1 ... dn) have field boundaries in the form of sine curves.

4. Photoelectric measuring device according to claim 2, characterized in that the photo-elements (a1 ... dn) have tongue-like sections which engage within one another in the manner of a zip fastener.

5. Photoelectric measuring device according to claim 1, characterized in that the photo-elements (a1 ... dn) are integrated on a silicon substrate (7).

6. Photoelectric measuring device according to claim 5, characterized in that the photo-elements (a1 ... dn) are isolated from one another by narrow, undoped zones (8).

7. Photoelectric measuring device according to claim 5, characterized in that the electrical circuit arrangement for the interconnection of the photo-elements (a1 ... dn) is integrated on the silicon substrate (7).

**Revendications**

1. Dispositif de mesure photo-électrique pour obtenir, par lecture d'une graduation de mesure avec une graduation de lecture, des signaux exempts d'harmoniques jusqu'à une largeur de bande prédéterminée, dans lequel les périodes de division des deux graduations sont égales ou très peu différentes et sont agencées dans l'espace, l'une par rapport à l'autre, de manière qu'il se forme lors d'une lecture une moirure dont la longueur de période est sensiblement supérieure aux périodes de division des graduations précitées, avec un système détecteur comportant des cellules photo-électriques qui convertissent chacun la lumière arrivant sur leur surface en signaux de lecture electriques, la surface de toutes les cellules photo-électriques du système détecteur étant subdivisée en champs partiels qui, pour ce qui est de leur forme, largeur et position, sont adaptés à ladite moirure de manière qu'en cas de combinaison des signaux de lecture les harmoniques de la largeur de bande prédéterminée soient éliminés d'au moins un signal de sortie périodique (S1, S2), caractérisé par le fait que plusieurs systèmes détecteurs (D1 ... Dn), ayant chacun au moins quatre champs partiels fournissant chacun des signaux exempts d'harmoniques jusqu'à la largeur de bande prédéterminée, sont agencés les uns à la suite des autres dans la direction de mesure, à des intervalles qui sont à chaque fois un multiple entier de la longueur de la période de la moirure, les signaux de lecture de cellules photo-électriques correspondantes de chaque système détecteur (D1 ... Dn) étant électriquement groupés.

2. Dispositif de mesure photo-électrique selon revendication 1, caractérisé par le fait que les cellules photo-électriques (a1 ... dn) des systèmes détecteurs (D1 ... Dn) ont leurs surfaces mutuellement imbriquées à la manière d'une fermeture à glissière.

3. Dispositif de mesure photo-électrique selon revendication 2, caractérisé par le fait que les cellules photo-électriques (a1 ... dn) présentent des délimitations de champ en forme de sinusoïdes.

4. Dispositif de mesure photo-électrique selon revendication 2, caractérisé par le fait que les cellules photo-électriques (a1 ... dn) présentent des portions en forme de languette qui sont imbriquées à la manière d'une fermeture à glissière.

5. Dispositif de mesure photo-électrique selon revendication 1, caractérisé par le fait que les cellules photo-électriques (a1 ... dn) sont intégrées sur un support en silicium (7).

6. Dispositif de mesure photo-électrique selon revendication 5, caractérisé par le fait que les cellules photo-électriques (a1 ... dn) sont mutuellement isolées par des zones étroites non dopées (8).

7. Dispositif de mesure photo-électrique selon revendication 5, caractérisé par le fait que les moyens de circuit pour le groupement électrique des cellules photo-électriques (a1 ... dn) sont intégrés sur le support en silicium (7).

EP 0 250 711 B1

Fig. 1

Fig. 2

Fig. 3

Fig. 4

Fig. 5

Fig.6

Fig. 7

Fig. 8

EP 0 250 711 B1